# EUROPEAN PATENT APPLICATION

(11) **EP 4 694 452 A1**
(43) Date of publication of application: **11.02.2026**
(21) Application number: 24784021.8
(22) Date of filing: 11.03.2024
(51) Int. Cl.: H04W 72/0446, H04W 72/02, H04W 74/08

(54) **CHANNEL ACCESS PROCESSING METHOD AND APPARATUS, RESOURCE SELECTION METHOD AND APPARATUS, AND TERMINAL**

(30) Priority: 06.04.2023 CN 202310365884
(71) Applicant: CICT Connected and Intelligent Technologies Co., Ltd., Chongqing 400041 (CN)
(72) Inventor: WEN, Xiaoran, Chongqing 400041 (CN); ZHAO, Rui, Chongqing 400041 (CN); WANG, Yakun, Chongqing 400041 (CN)
(74) Representative: Penza, Giancarlo
(86) International application number: PCT/CN2024/080891
(87) International publication number: WO 2024/207936

(57) **Abstract**

The disclosure provides a method for processing channel access procedure and apparatus, a method for resource selection and apparatus, and a terminal. The channel access method is applied to a terminal, and includes: in a case that channel access is not completed before a first transmission, performing at least one of the following: continuing the uncompleted channel access procedure; restarting the channel access procedure at a target moment; in response to that the minimum value of the channel access time is determined to be less than or equal to a preset time interval, restarting the channel access procedure at the target moment; performing resource reselection; abandoning transmissions, which cannot be transmitted due to channel access failure, in MCSt; and abandoning the first transmission and subsequent transmissions; wherein the first transmission is any one of the MCSt.

## Description

### Cross-Reference to Related Application

The present disclosure claims the priority of Chinese patent application no.202310365884.X, filed in China on April 6, 2023, the disclosure of which is incorporated herein by reference in its entirety.

### Technical Field

The disclosure relates to the technical field of communications, and in particular, to a method for processing channel access procedure, a method for resource selection and apparatus, and a terminal.

### Background

A sidelink mode-2 resource allocation method in the related art is based on scenarios in which a terminal works on a dedicated carrier, that is, a sidelink user equipment (UE) can ensure that transmission is completed on a reserved resource, and there is no need to worry that a channel is occupied by other technologies.

However, for an unlicensed frequency band, the UE needs to complete channel access before transmission, and can consecutively occupy a channel for only a period of time; in a case that interruption occurs during transmission, the channel may be occupied by other technologies, and the subsequent transmission cannot be completed. For this, the concept of multi-consecutive slot transmission (MCSt) is introduced in a sidelink-unlicense (SL-U).

However, there is no transmission mechanism suitable for MCSt in the related art. For example, a specific channel access mechanism, a resource selection mechanism, and a method for determining a channel access priority class(CAPC) all requires designing for MCSt, so as to ensure reliability of sidelink transmission.

### Summary

Embodiments of the disclosure provide a method for processing channel access procedure, a method for resource selection and apparatus, and a terminal, and solves the problem in the related art that there is no transmission mechanism suitable for MCSt.

According to a first aspect, an embodiment of the disclosure provides a method for processing channel access procedure, including:
in a case that channel access is not completed before a first transmission, performing at least one of the following:
continuing the uncompleted channel access procedure;
restarting the channel access procedure at a target moment;
in response to that the minimum value of the channel access time is determined to be less than or equal to a preset time interval, restarting the channel access procedure at the target moment;
performing resource reselection;
abandoning transmissions, which cannot be transmitted due to channel access failure, in MCSt; and
abandoning the first transmission and subsequent transmissions; wherein the first transmission is any one of the MCSt.

Alternatively, the target moment may include at least one of:
a first moment configured or pre-configured by higher layers;
a second moment in response to that channel access failure is determined; and
a start moment of the first transmission.

Alternatively, the preset time interval is one of:
a length of a time slot; or,
an interval between the target moment and a second transmission, wherein the second transmission is a next transmission subsequent to the first transmission in the MCSt.

Alternatively, the time-domain length occupied by the MCSt is one of:
a pre-configured first time-domain length; or
a second time-domain length determined according to the remaining channel occupancy time (COT).

Alternatively, the method for processing channel access procedure further includes:
in a case that some resources of transmission resources in the MCSt are located in the target COT, performing at least one of the following:
under the condition of meeting the maximum extendable time of the COT, extending the target COT until all the transmission resources are located in the target COT; and
for transmissions corresponding to transmission resources which are not located in the target COT, using the first channel access type to perform channel access.

Alternatively, before restarting the channel access procedure at the target moment, the method further includes:
determining a minimum value of the channel access time according to a CAPC used by the second transmission, wherein the second transmission is a next transmission subsequent to the first transmission in the MCSt.

According to a second aspect, an embodiment of the disclosure provides a method for resource selection, including:
performing resource selection or resource reselection according to at least one of the following information:
received shared channel occupancy information;
the maximum extendable time of the COT; and
a time-domain length occupied by the MCSt.

Alternatively, the time-domain length occupied by the MCSt is one of:
a pre-configured first time-domain length; or
a second time-domain length determined according to the remaining COT.

Alternatively, the method further includes at least one of:
during resource selection or resource reselection, preferentially selecting in the COT a transmission resource;
during resource selection or resource reselection, determining a resource selection window according to available COT;
in response to performing resource reselection for the target transmission, selecting a resource consecutive with the time domain position of the MCSt, wherein the target transmission includes at least one transmission that fails in the MCSt.

Alternatively, the method for resource selection further includes:
in a case that some resources of transmission resources in the MCSt are located in the target COT, performing at least one of the following:
performing resource reselection on all transmission resources of the MCSt;
performing resource reselection on transmission resources, which are not located in the target COT, in the MCSt; and
maintaining the transmission resources of the MCSt.

According to a third aspect, an embodiment of the disclosure provides a method for determining CAPC, including:
determining a CAPC used for MCSt, wherein the CAPC used for MCSt is one of the following:
a first CAPC corresponding to a data packet with the highest CAPC in the MCSt;
a second CAPC corresponding to a data packet with the lowest CAPC in the MCSt;
a pre-configured third CAPC;
a default fourth CAPC;
a fifth CAPC corresponding to a randomly selected transmission in the MCSt; and
a sixth CAPC corresponding to most transmissions in the MCSt.

According to a fourth aspect, an embodiment of the disclosure provides a terminal, including: a transceiver, a memory, a processor and a computer program which is stored on the memory and can operate on the processor, the processor executing the computer program to implement the steps of the method for processing channel access procedure according to the first aspect, or the steps of the method for resource selection according to the second aspect, or the steps of the method for determining the CAPC according to the third aspect.

According to a fifth aspect, an embodiment of the disclosure provides a apparatus for processing channel access procedure, including:
a first processing component, configured to, in a case that channel access is not completed before a first transmission, perform at least one of the following:
continuing the uncompleted channel access procedure;
restarting the channel access procedure at a target moment;
in response to that the minimum value of the channel access time is determined to be less than or equal to a preset time interval, restarting the channel access procedure at the target moment;
performing resource reselection;
abandoning transmissions, which cannot be transmitted due to channel access failure, in MCSt; and
abandoning the first transmission and subsequent transmissions; wherein the first transmission is any one of the MCSt.

According to a sixth aspect, an embodiment of the disclosure provides an apparatus for resource selection, including:
a fourth processing component, configured to perform resource selection or resource reselection according to at least one of the following information:
received shared channel occupancy information;
the maximum extendable time of the COT; and
a time-domain length occupied by the MCSt.

According to a seventh aspect, an embodiment of the disclosure provides an apparatus for determining CAPC, including:
a CAPC determining component, configured to determine a CAPC for MCSt, wherein the CAPC used for MCSt is one of the following:
a first CAPC corresponding to a data packet with the highest CAPC in the MCSt;
a second CAPC corresponding to a data packet with the lowest CAPC in the MCSt;
a pre-configured third CAPC;
a default fourth CAPC;
a fifth CAPC corresponding to a randomly selected transmission in the MCSt; and
a sixth CAPC corresponding to most transmissions in the MCSt.

According to an eighth aspect, an embodiment of the disclosure provides a computer readable storage medium, on which a computer program is stored, wherein in response to that being executed by the processor, the computer program implements the steps of the method for processing channel access procedure according to the first aspect, or the steps of the method for resource selection according to the second aspect, or the steps of the method for determining the CAPC according to the third aspect.

The beneficial effects of the technical solution of the disclosure are:
in the described solution, in one aspect, in a case that not completing channel access before a first transmission, the terminal performs at least one of the following: continuing the uncompleted channel access procedure; restarting the channel access procedure at a target moment; in response to that the minimum value of the channel access time is determined to be less than or equal to a preset time interval, restarting the channel access procedure at the target moment; performing resource reselection; abandoning transmissions, which cannot be transmitted due to channel access failure, in MCSt; and abandoning the first transmission and subsequent transmissions; wherein the first transmission is any one of the MCSt. In this way, a processing mechanism for channel access of MCSt is defined, thereby solving the problem in the related art that there is no a channel access mechanism suitable for MCSt. In another aspect, resource selection or resource reselection is performed according to at least one of received shared channel occupancy information, the maximum extendible time of COT, and a time-domain length occupied by MCSt, thereby defining the resource selection mechanism of MCSt, and solving the problem in the related art that there is no resource selection mechanism suitable for MCSt. In still another aspect, the disclosure further defines a method for determining CAPC used in MCSt, thereby solving the problem in the related art that there is no method for determining CAPC, suitable for MCSt. By defining the channel access mechanism, resource selection mechanism and CAPC determination mechanism for MCSt, the reliability of sidelink transmission can be ensured.

### Brief Description of the Drawings

Fig. 1 is a flowchart illustrating a method for processing channel access procedure according to an embodiment of the disclosure;
Fig. 2 is a first schematic diagram of channel access of MCSt according to an embodiment of the disclosure;
Fig. 3 is a second schematic diagram of channel access of MCSt according to an embodiment of the disclosure;
Fig. 4 is a third schematic diagram of channel access of MCSt according to an embodiment of the disclosure;
Fig. 5 is a fourth schematic diagram of channel access of MCSt according to an embodiment of the disclosure;
Fig. 6 is a fifth schematic diagram of channel access of MCSt according to an embodiment of the disclosure;
Fig. 7 is a sixth schematic diagram of channel access of MCSt according to an embodiment of the disclosure;
Fig. 8 is a flowchart of a method for resource selection according to an embodiment of the disclosure;
Fig. 9 is a first schematic diagram of resource reselection of MCSt according to an embodiment of the disclosure;
Fig. 10 is a second diagram of resource reselection of MCSt according to an embodiment of the disclosure;
Fig. 11 is a flowchart of a method for determining CAPC according to an embodiment of the disclosure;
Fig. 12 is a schematic diagram of a CAPC according to an embodiment of the disclosure;
Fig. 13 is a block diagram of a apparatus for processing channel access procedure according to an embodiment of the disclosure;
Fig. 14 is a structural block diagram of an apparatus for resource selection according to an embodiment of the disclosure;
Fig. 15 is a structural block diagram of an apparatus for determining CAPC according to an embodiment of the disclosure;
Fig. 16 is a first schematic structural diagram of hardware of a terminal according to an embodiment of the disclosure;
Fig. 17 is a second schematic structural diagram of hardware of a terminal according to an embodiment of the disclosure;
Fig. 18 is a third schematic structural diagram of hardware of a terminal according to an embodiment of the disclosure.

### Detailed Description of the Embodiments

To make the technical problems to be resolved, technical solutions, and advantages of the disclosure clearer, the following describes the disclosure in detail with reference to the accompanying drawings and specific embodiments. In the following descriptions, specific details such as specific configurations and components are provided only to help fully understand embodiments of the disclosure. Therefore, a person skilled in the art should understand that various changes and modifications may be made to the embodiments described herein without departing from the scope and spirit of the disclosure. In addition, for clarity and simplicity, descriptions of known functions and constructions are omitted.

It should be understood that, "one embodiment" and "an embodiment" throughout this description means that specific features, structures or characteristics related to the embodiments may be included in at least one embodiment of the disclosure. Therefore, descriptions of "in one embodiment" or "in an embodiment" in various places throughout this description are unnecessary to refer to a same embodiment. In addition, the specific features, structures, or characteristics may be combined in one or more embodiments in any appropriate manner.

In embodiments of the disclosure, it should be understood that, sequence numbers of the foregoing processes do not mean execution sequences. The execution sequences of the processes should be determined based on functions and internal logic of the processes, and should not be construed as any limitation on the implementation processes of embodiments of the disclosure.

Additionally, the terms "system" and "network" may be used interchangeably herein.

In the embodiments of the disclosure, it should be understood that, "B that corresponds to A" means that B is associated with A, and B may be determined based on A. However, it should be further understood that determining B based on A does not mean that B is determined based on only A. B may alternatively be determined based on at least one of A and other information.

Hereinafter, the technical solutions in the embodiments of the disclosure will be described clearly and thoroughly with reference to the accompanying drawings of the embodiments of the disclosure. Obviously, the embodiments as described are only some of the embodiments of the disclosure, and are not all of the embodiments of the disclosure. All other embodiments obtained by a person skilled in the art on the basis of the embodiments in the application without creative work shall fall within the scope of protection of the disclosure.

First, the content involved in the solutions provided in the embodiments of the disclosure are introduced below.

### I. Channel access procedure of NR-U

The channel access procedure on the shared spectrum is a sensing-based procedure that evaluates the availability of channels for performing transmission. The basic unit for sensing is a sensing slot having a length of Tₛₗ=9µs. In a case that an eNB/gNB or a UE senses in a sensing slot and determines that an monitoring energy of at least 4µs in the sensing slot is less than an energy detection threshold X_{Thresh}, it is considered that the sensing slot is idle; otherwise, it is considered that the sensing slot duration is busy.

The channel access procedure of an NR-U system is divided into two types: Type 1 and Type 2, wherein Type 2 is further divided into channel access modes Type 2A, Type 2B and Type 2C. The foregoing two channel access procedures are described below by taking a downlink channel access mode as an example.
1. Type 1 (i.e. the first channel access type, or a first channel access type 1):
   The eNB/NB may sense that a channel is idle within a sensing slot duration of a backoff time T_{d}, and initiate transmissions after the value of a counter N in step 4 becomes 0. The counter N adjusts by sensing the additional sensing slot durations according to the following steps:
   step 1, setting N=Nᵢₙᵢₜ, wherein Nᵢₙᵢₜ is a random number uniformly distributed between 0 and CWₚ, and proceeding to step 4;
   step 2, in a case that N > 0 and the eNB/gNB selects to decrease counters, setting N = N-1;
   step 3, detecting a channel within an additional sensing slot duration, and in a case that the additional sensing slot duration is idle, proceeding to step 4, otherwise, proceeding to step 5;
   step 4, in a case that N = 0, stopping; otherwise, proceeding to step 2;
   step 5, detecting the channel until either a busy sensing slot is detected within an additional backoff time T_{d}, or all sensing slots within the additional backoff time T_{d} are idle;
   step 6, in a case that all the sensing slots in the T_{d} are idle, proceeding to step 4; otherwise, proceeding to step 5.

In a case that the eNB/eNB does not perform transmission after step 4, the UE may perform transmission on the channel in a case that the channel is detected to be idle for at least one sensing slot duration Tₛₗ, and all sensing slot durations within the backoff time T_{d} before the transmission are also idle. In response to that the eNB/gNB first detects the channel after preparing for transmission, in a case that the channel is not detected to be idle during the sensing slot duration Tₛₗ, or in a case that the channel is not detected to be idle during any sensing slot duration within the backoff time T_{d} before the intended transmission, the eNB/gNB continues to perform step 1 after the channel is idle during the sensing slot duration within the backoff time T_{d},
wherein T_{d} consists of T_{f} = 16us and mp successive sensing slot durations Tₛₗ, and T_{f} includes an idle sensing slot duration Ts at the beginning of T_{f}.
CW_{min,p} ≤ CWₚ ≤ CW_{max,p} is a contention window; CW_{min,p} and CW_{max,p} are selected before step 1; mₚ, CW_{min,p} and CW_{max,p} are based on a channel access priority p related to eNB/gNB transmission; and the eNB/gNB shall not transmit on a channel for exceeding the channel occupancy time T_{m cot,p}.

Specifically, Table 1 below illustrates the CAPC:

**Table 1. CAPC**

| CAPC(p) | mp | CW_{min,p} | CW_{max,p} | T_{mcot,p} | allowed CWₚ sizes |
|---|---|---|---|---|---|
| 1 | 1 | 3 | 7 | 2ms | {3, 7} |
| 2 | 1 | 7 | 15 | 3ms | {7, 15} |
| 3 | 3 | 15 | 63 | 8or10ms | {15, 31, 63} |
| 4 | 7 | 15 | 1023 | 8or10ms | {15, 31, 63, 127, 255, 511, 1023} |

2. Type 2 (the second channel access type, or channel access type 2), alternatively including the following three types:
Type 2A channel access is applied only to the following transmissions performed by the eNB/gNB:
transmissions initiated by the eNB, including discovery bursts but excluding PDSCH, with a transmission duration of up to 1 ms;
transmissions initiated by the gNB, which are either only discovery bursts or multiplexed with non-unicast information, with a transmission duration of up to 1 ms and a duty cycle of the discovery burst not exceeding 1/20.

The eNB/gNB transmissions occur 25µs after the UE's transmission on the shared channel.

The Type 2B or Type 2C channel access is applied to gNB transmissions that occur 16µs or up to 16µs after the UE's transmission on the shared channel.

### Type 2A:

The eNB/gNB can immediately initiate a downlink transmission after sensing that the channel is idle for at least one sensing interval T_{short_dl} = 25µs. T_{short_dl} consists of T_{f} = 16µs and the following one sensing slot; and T_{f} includes a sensing slot at the beginning of T_{f}. In a case that it is detected that both of the two sensing slots of T_{short_d1} are idle, it is considered that the channel is idle for T_{short_d1}.

### Type 2B:

The gNB can immediately initiate a downlink transmission after sensing that the channel is idle for T_{f} = 16µs. T_{f} includes a sensing slot located in the last 9µs of T_{f}. In a case that the channel is sensed to have an idle duration of at least 5µs, and at least 4µs is within the sensing slot, then the channel is considered to be idle for a duration of T_{f}.

### Type 2C:

The gNB does not perform channel sensing before a downlink transmission, and the downlink transmission duration is at most 584µs.

In addition, in a case that the gNB shares channel occupancy initiated by the UE using a channel occupancy program, the gNB can perform transmission after the uplink transmission on scheduled resources, or after a gap following the UE's PUSCH transmission on configured resources, which is alternatively as follows:
the transmissions includes transmissions to the UE that initiates the channel occupancy, and may include at least one of non-unicast transmissions and unicast transmissions, wherein any unicast transmission including user plane data is directed only to the UE that initiates the channel occupancy.

In a case that the gap is 25µs or 16µs, the gNB can perform transmission after completing Type 2A or Type 2B channel access.

In a case that the gap is less than 16µs, the gNB may perform transmission after completing Type 2C channel access.

In response to that the gNB initiates a transmission using the Type 1 channel access procedure and shares the corresponding channel occupancy with the UE, in a case that any gap between any two transmissions within the channel occupancy of the gNB does not exceed 25µs, the gNB may perform transmission after the UE performs transmission within its channel occupancy. In this case: in a case that the gap is 25µs or 16µs, the gNB may perform transmission after completing Type 2A or 2B channel access; and in a case that the gap is less than 16µs, the gNB may perform transmission after completing Type 2C channel access.

Embodiments of the disclosure provide a method for processing channel access procedure, a method for resource selection and apparatus, and a terminal, which solve the problem in the related art that there is no channel access mechanism, resource selection mechanism and CAPC determination mechanism applicable to MCSt.

### First embodiment

**It** should be noted that, after MCSt is introduced into the SL-U, for a specific channel access mechanism, there is no reference scheme in the related art, and in order to ensure the reliability of the transmission of the sidelink service, a channel access method suitable for MCSt needs to be considered.

The following introduces a method for processing channel access procedure provided for MCSt in the present embodiment.

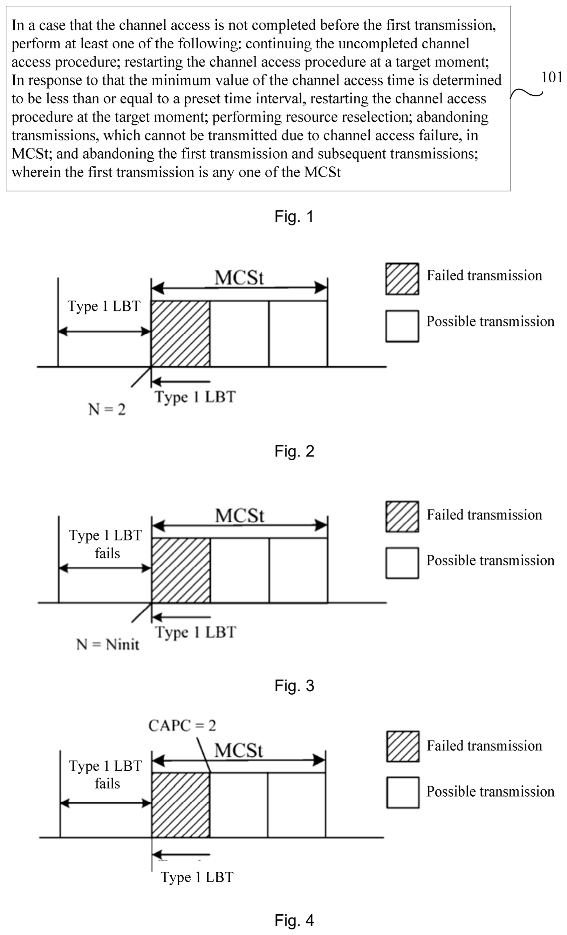

As shown in Fig. 1, an embodiment of the disclosure provides a method for processing channel access procedure. Alternatively, the method is applied to a terminal, and includes the following steps:
Step 101: in a case that channel access is not completed before the first transmission, performing at least one of items 1-6:
item 1: the uncompleted channel access procedure is continued.

It should be noted that the UE not completing channel access before the first transmission may include two scenarios:
scenario 1: the value of the counter N has not decreased to 0, meaning that the Type 1 channel access procedure has not been completed; and
scenario 2: after successfully completing Type 1 channel access, the terminal does not immediately send the data packet (e.g., due to a time gap between the reserved resources and the moment of successful channel access), and in a case that the channel is not detected to be idle before transmission, the terminal needs to restart Type 1 channel access.

For the aforementioned scenario 1, the terminal may choose to continue the uncompleted channel access procedure,that is to say, there is no need to reset the counter N, and it can continue decrementing the value of N.

Alternatively, to ensure fairness, the condition for continuing the uncompleted channel access procedure is that the CAPCs of subsequent transmissions are less than or equal to (i.e., p being greater than or equal to) that of the first transmission.

Exemplarily, as shown in Fig. 2, in response to that the CAPC of the second transmission is the same as that of the first transmission, in a case that the UE fails to complete Type 1 channel access before the first transmission of the MCSt, and the value of the counter N for Type 1 channel access is 2, then the UE can continue the uncompleted Type 1 channel access procedure, and the value of the counter N may decrease from 2.

Item 2, the channel access procedure is restarted at the target moment.

For the aforementioned scenario 2, the UE can only restart the Type 1 channel access procedure, and start to perform the channel access of Type 1 from the target moment. Alternatively, the target moment includes at least one of the following: a first moment configured or pre-configured by higher layers; a second moment in response to that channel access failure is determined, and a start moment of the first transmission.

Exemplarily, as shown in Fig. 3, before the first transmission of MCSt, the terminal fails to perform channel access uses Type 1, and then the terminal restarts channel access procedure of Type 1 at the moment in response to that the channel access of Type 1 fails (in this example, it is also a start moment of the first transmission of MCSt), and it is set that N = Nᵢₙᵢₜ.

Item 3: in response to that the minimum value of the channel access time is determined to be less than or equal to a preset time interval, the channel access procedure at the target moment is restarted.

Herein, it is determined whether the minimum value of the channel access time is less than or equal to the preset time interval, that is, it is determined whether Type 1 channel access can be completed at the next transmission moment.

In one embodiment, the minimum value of the channel access time may be determined according to a CAPC used by the second transmission, wherein the second transmission is a next transmission subsequent to the first transmission in the MCSt.

It should be noted that the channel access time of Type 1 is not only related to the actual channel occupancy but also depends on the length of the defer time T_{d} (T_{d}=T_{f}+mp×Tₛₗ) and the value of Nᵢₙᵢₜ. Both T_{d} and Nᵢₙᵢₜ are determined by the CAPC. Specifically, T_{d} consists of T_{f} = 16 µs and a following duration Tₛₗ of mp consecutive sensing slots; Nᵢₙᵢₜ is a random number evenly distributed between 0 and CWₚ. That is, with the CAPC of the current transmission known, the minimum value of the Type 1 channel access time can be estimated, wherein the minimum value refers to the channel access time required under the assumption that all channel monitoring attempts during Tₛₗ are successful.

Alternatively, the preset time interval is one of the following: the length of one slot; or an interval between the target moment and a second transmission, wherein the second transmission is a next transmission subsequent to the first transmission in the MCSt.

Exemplarily, as shown in Fig. 4, assuming that the terminal intends to perform a transmission with a CAPC of 2, wherein mp = 2 and Nᵢₙᵢₜ = 7, then according to the Type 1 channel access procedure, the terminal must sense at least one T_{d} and Nᵢₙᵢₜ idle Tₛₗ, that is, T_{f}+mp×Tₛₗ+Nᵢₙᵢₜ×Tₛₗ=16+2×9+7×9= 97us idle periods. Assuming that the preset interval is a slot length (0.5 ms), i.e., 500 µs, then 97 < 500, so the UE has the opportunity to complete Type 1 channel access, and can perform Type 1 channel access for the second transmission.

In this embodiment, by comparing this minimum value with the preset time interval, it can be learn whether the terminal has the opportunity to complete Type 1 channel access before the second transmission, wherein the second transmission is a next transmission subsequent to the first transmission in the MCSt.

Item 4: resource reselection is performed.

In a case that the terminal fails to access the channel before the first transmission of the MCSt, the terminal choose to perform resource reselection, and the resource reselection can be done either by reselecting resources for the entire MCSt or only for the transmissions that fail due to unsuccessful channel access.

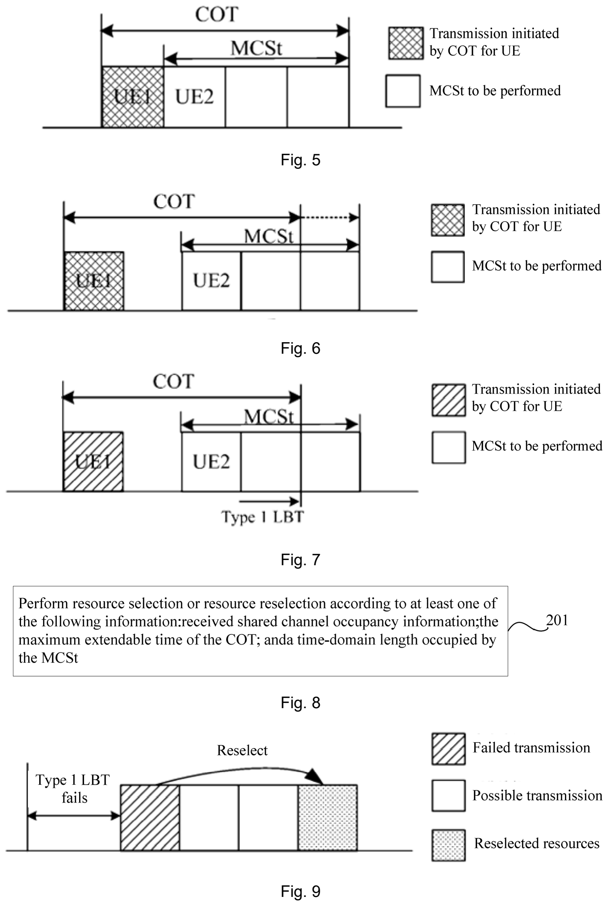

In a specific implementation, in a case that the terminal only reselects resources for failed transmissions, the following two implementations may also be selected:
implementation 1: performing resource reselection according to the resource selection procedure in the related art, i.e., selecting single-slot resources; and
implementation 2: as shown in Fig. 9, selecting resources that are consecutive in the time domain position with the current MCSt.

Item 5: transmissions, which cannot be transmitted due to channel access failure, in MCSt are abandoned.

It should be noted that, in a case that the channel cannot be accessed before the first transmission, the first transmission cannot be performed as the channel cannot be accessed; by the same reasoning, in a case that the channel cannot be accessed before the second transmission and after the first transmission, the second transmission cannot be performed as the channel cannot be accessed, and so on.

Item 6: the first transmission and subsequent transmissions are abandoned; wherein the first transmission is any one of the MCSt.

That is, in a case that the channel cannot be accessed before the first transmission, the entire consecutive multi-slot transmission is abandoned.

It should be noted that, the first transmission in the above embodiment does not alternatively refer to the initial transmission of the MCSt; in a case that a previous transmission in the MCSt fails to be sent, the next transmission can also be considered the first transmission. That is, the present solution can be iteratively applied to each transmission in the MCSt, i.e., the first transmission refers to any transmission within the MCSt.

In one embodiment, the time-domain length occupied by the MCSt is one of:
a pre-configured first time-domain length; or
a second time-domain length determined according to the remaining COT.

In a specific implementation, the duration of the MCSt transmission may be indicated to a physical layer by a high layer, or maintained by the high layer itself, and no matter which manner is used, the time-domain length for transmitting the MCSt needs to be determined. The time-domain length occupied by the MCSt includes the following two types:
type 1: the pre-configured first time-domain length, i.e., the higher layer selects a time-domain length for MCSt transmission from a pre-configured parameter set; and
type 2: the second time-domain length is determined according to the remaining COT. That is, in response to that the UE has COT available, such as having received shared channel occupancy information from other UEs before resource selection, the time-domain length of the MCSt can be determined on the basis of the remaining COT, ensuring that the MCSt's time-domain length is less than or equal to the remaining COT, so as to guarantee that transmission can be completed within the COT.

Exemplarily, as shown in Fig. 5, after performing channel access, UE1 shares 2ms of COT with a UE2. Upon receiving the COT information, the UE2 learns that UE1 has used 0.5ms for transmission, leaving 1.5ms of the COT available. Assuming that each slot has a duration of 0.5ms, the UE2 may select the length of MCst as 3 slots, thereby ensuring that transmission can be completed within the COT.

In one embodiment, the method further includes:
in a case that some resources of transmission resources in the MCSt are located in the target COT, performing at least one of the following:
under the condition of meeting the maximum extendable time of the COT, extending the target COT until all the transmission resources are located in the target COT; and
for transmissions corresponding to transmission resources which are not located in the target COT, using the first channel access type to perform channel access.

Exemplarily, as shown in Fig. 6, the MCSt of the UE2 has two slots within the COT shared by the UE1 and one slot outside the COT shared by the UE1. The COT has a duration of 2ms. Since the COT can be extended by up to 20 ms, the COT can be extended by one slot (0.5ms) to complete the MCSt.

### The specific methods for extending the COT may include: in response to that the sending the first transmission, the UE2 indicates to the UE1 a COT duration which needs to be extended, or broadcasting and sending same, or the UE2 directly continues to occupy the channel.

Exemplarily, as shown in Fig. 7, in a case that the MCSt of the UE2 has two slots within the COT shared by the UE1 and one slot outside of the COT shared by the UE1, then the UE2 considers that only the first two transmissions can use the COT, and for the last transmission, UE2 performs Type 1 channel access before transmitting.

In a specific example, in a case that the terminal receives the COTs shared by other terminals in response to that there are already reserved resources, the following steps may be further performed:
step 1: determining whether all reserved MCSt resources are located in the COT, and in a case that all reserved MCSt resources are located in the COT, performing step 2; otherwise, performing step 3;
step 2: maintaining the currently determined transmission resources;
step 3: determining whether some of the reserved MCSt resources are located in the COT, and in a case that some of the reserved MCSt resources are located in the COT, performing step 4; otherwise, performing step 5;
step 4: performing at least one of the following:
   (1) under the condition that the maximum extendible time of the COT is not exceeded, the COT is extended until the MCSt is completed; and
   (2) maintaining the transmission resources within the COT, and for resources not included in the COT, performing Type 1 (first channel access type) channel access;
step 5: performing at least one of the following:
   (1) maintaining the currently determined transmission resources; and
   (2) performing resource reselection for the current MCSt.

### Second embodiment

It should be noted that, after MCSt is introduced into the SL-U, for a specific resource selection mechanism, there is no reference scheme in the related art, and in order to ensure the reliability of the transmission of the sidelink service, a method for resource selection suitable for MCSt needs to be considered.

The following introduces a method for resource selection provided for MCSt in the present embodiment.

As shown in Fig. 8, an embodiment of the disclosure provides a method for resource selection. Alternatively, the method is applied to a terminal, and includes the following steps:
step 201: performing resource selection or resource reselection according to at least one of the following information:
received shared channel occupancy information;
the maximum extendable time of the COT; and
a time-domain length occupied by the MCSt.

It should be noted that, for transmissions without available shared channel occupancy information, the UE can only perform Type 1 channel access, which is time-consuming and cannot guarantee that access will be completed before the selected resource, which may result in packet loss.

In the embodiments of the disclosure, for the MCSt, the transmission duration is related to the time-domain length of the MCSt configured by higher layers, while the available time of the COT is typically limited. Therefore, in response to performing resource selection for MCSt, at least one of the following can be considered: the received shared channel occupancy information, the maximum extendable time of the COT, and the time-domain length occupied by the MCSt, so that a transmission resource can be located in one COT as far as possible, and the channel access efficiency and the reliability of data packet transmission can be effectively improved.

In one embodiment, the time-domain length occupied by the MCSt is one of:
a pre-configured first time-domain length; or
a second time-domain length determined according to the remaining COT.

In a specific implementation, the duration of the MCSt transmission may be indicated to a physical layer by a high layer, or maintained by the high layer itself, and no matter which manner is used, the time-domain length for transmitting the MCSt needs to be determined. The time-domain length occupied by the MCSt includes the following two types:
type 1: the pre-configured first time-domain length, i.e., the higher layer selects a time-domain length for MCSt transmission from a pre-configured parameter set; and
type 2: the second time-domain length is determined according to the remaining COT. That is, in response to that the UE has COT available, such as having received shared channel occupancy information from other UEs before resource selection, the time domain length of the MCSt can be determined on the basis of the remaining COT, ensuring that the MCSt's time-domain length is less than or equal to the remaining COT, so as to guarantee that transmission can be completed within the COT.

Exemplarily, as shown in Fig. 5, after performing channel access, UE1 shares 2ms of COT with a UE2. Upon receiving the COT information, the UE2 learns that UE1 has used 0.5ms for transmission, leaving 1.5ms of the COT available. Assuming that each slot has a duration of 0.5ms, the UE2 may select the length of MCst as 3 slots, thereby ensuring that transmission can be completed within the COT.

In one embodiment, the method further includes at least one of:
during resource selection or resource reselection, preferentially selecting in the COT a transmission resource;
during resource selection or resource reselection, determining a resource selection window according to available COT;
in response to performing resource reselection for the target transmission, selecting a resource consecutive with the time domain position of the MCSt, wherein the target transmission includes at least one transmission that fails in the MCSt.

Exemplarily, as shown in Fig. 9, during resource selection or resource reselection, the reselected resources are consecutive resources after the time domain position of the current MCSt.

It needs to be pointed out that, during resource selection or resource reselection, a transmission resource is preferentially selected in at least one of COT, and a resource selection window is determined according to an available COT, so that the transmission resources can be located in the same COT as much as possible, and the channel access efficiency and the reliability of data packet transmission can be effectively improved.

In one embodiment, the method further includes:
in a case that some resources of transmission resources in the MCSt are located in the target COT, performing at least one of the following:
performing resource reselection on all transmission resources of the MCSt;
performing resource reselection on transmission resources, which are not located in the target COT, in the MCSt; and
maintaining the transmission resources of the MCSt.

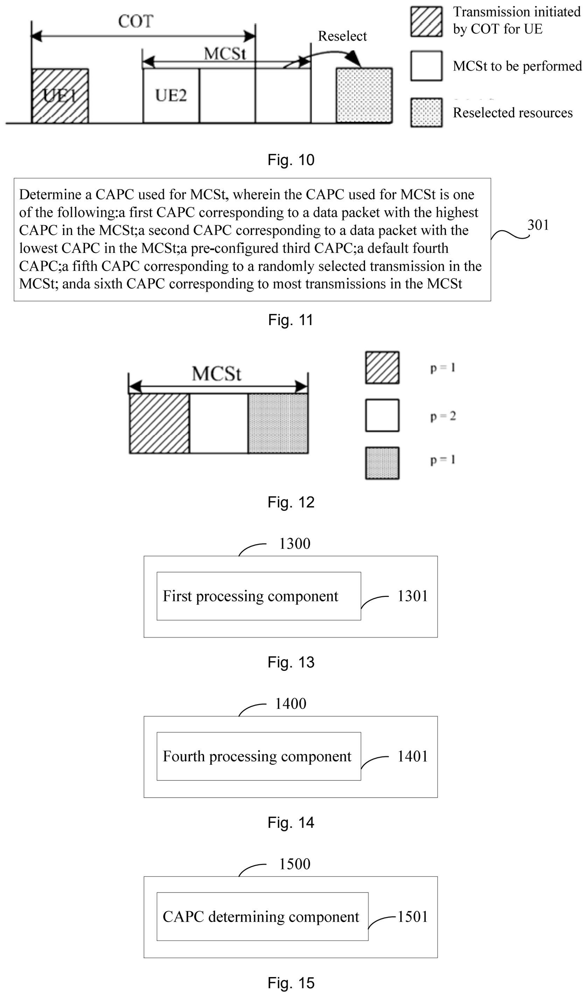

Exemplarily, as shown in Fig. 10, in a case that the MCSt of the UE2 has two slots within the COT shared by the UE1 and one slot outside of the COT shared by the UE1, then the UE2 considers that only the first two transmissions can use the COT, and resource reselection is performed for the last transmission.

In a specific example, in a case that the terminal receives the COTs shared by other terminals in response to that there are already reserved resources, the following steps may be further performed:
step 1: determining whether all reserved MCSt resources are located in the COT, and in a case that all reserved MCSt resources are located in the COT, performing step 2; otherwise, performing step 3;
step 2: maintaining the currently determined transmission resources;
step 3: determining whether some of the reserved MCSt resources are located in the COT, and in a case that some of the reserved MCSt resources are located in the COT, performing step 4; otherwise, performing step 5;
step 4: performing at least one of the following:
   (1) performing resource reselection on all transmission resources of the MCSt;
   (2) for resources not included in the COT, performing resource reselection;
   (3) maintaining the currently determined transmission resources; and
step 5: performing at least one of:
   (1) maintaining the currently determined transmission resources; and
   (2) performing resource reselection for the current MCSt.

### Third Embodiment

**It** should be noted that, after MCSt is introduced into the SL-U, for the specific CAPC determination solutions, there is no reference techniques in the related art, and in order to ensure the reliability of the transmission of the sidelink service, a CAPC determination solution suitable for MCSt needs to be considered.

The following introduces a CAPC determination method provided for MCSt in the present embodiment.

As shown in Fig. 11, a third embodiment of the disclosure provides a method for determining CAPC. Alternatively, the method is applied to a terminal, and includes the following steps:
step 301: determining a CAPC used for MCSt, wherein the CAPC used for MCSt is one of the following:
a first CAPC corresponding to a data packet with the highest CAPC in the MCSt;
a second CAPC corresponding to a data packet with the lowest CAPC in the MCSt;
a pre-configured third CAPC;
a default fourth CAPC;
a fifth CAPC corresponding to a randomly selected transmission in the MCSt; and
a sixth CAPC corresponding to most transmissions in the MCSt.

It should be noted that, for the Type 1 channel access procedure, the channel access time is related to the CAPC of the intended transmission. Specifically, the lower the CAPC (the larger the value of p), the longer the time taken to perform Type 1 channel access. With regard to MCSt, since a uniform channel access manner is used, in a case that CAPCs are different, there will be a problem of fairness. Therefore, in the present embodiment, in a case that the MCSt includes data packets of different CAPCs, the higher layer determines a CAPC to be used for the MCSt.

Exemplarily, as shown in Fig. 12, one MCSt includes three transmissions, and the CAPCs of data packets in the first transmission and the third transmission are 1, in a case that the CAPC of the data packet in the second time is 2, then the terminal may determine the CAPC to be used for the MCSt to be 1 according to the first CAPC (p=1) corresponding to the data packet with the highest CAPC, or determine the CAPC to be used for the MCSt to be 2 according to the second CAPC (p=2) corresponding to the data packet with the lowest CAPC.

It should be further explained that the CAPC corresponding to the data packet is mapped on the basis of information related to the service carried by the data packet, for example, the CAPC corresponding to the data packet can be derived from the quality of service identifier (PC5 5G QoS Identifier (PQI)) of the service. That is, MCSt includes multiple transmissions; data packets transmitted for multiple times may correspond to different CAPCs; and a CAPC used for MCSt needs to be determined on the basis of the foregoing embodiment.

In this embodiment, in a case that a default fourth CAPC or a pre-configured third CAPC is configured for the MCSt, then the default fourth CAPC or the pre-configured third CAPC may also be used. For example, in a case that the default CAPC for the MCSt is configured as 3, then for this MCSt, even in a case that it does not include data packets with a CAPC of 3, the CAPC of the MCSt can still be configured as 3.

In this embodiment, the higher layer may also determine that the CAPC of the MCSt is the CAPC of any one transmission in the MCSt. For example, the CAPC of the MCSt is the CAPC of the first transmission in the MCSt, i.e., p=1.

In this embodiment, the higher layer may also determine that the CAPC of the MCSt is the CAPC of the majority of transmissions in the MCSt. For example, one MCSt includes three transmissions, and assuming that the CAPCs of two transmissions are 1, then the higher layer determines that the CAPC of this MCSt is p=1.

The first embodiment to the third embodiment provide the channel access methods for sidelink UEs operating in the unlicensed spectrum during MCSt, which consider the method for resource selection for MCSt in response to that shared channel occupancy information is available, thereby ensuring fairness in sidelink channel access and improving the reliability of sidelink UE transmissions in the unlicensed spectrum. This is particularly suitable for the transmission of sidelink UEs operating in the unlicensed spectrum.

### Fourth embodiment

As shown in Fig. 13, an embodiment of the disclosure provides a apparatus for processing channel access procedure 1300, including:
a first processing component 1301, configured to, in a case that channel access is not completed before a first transmission, perform at least one of the following:
continuing the uncompleted channel access procedure;
restarting the channel access procedure at a target moment;
in response to that the minimum value of the channel access time is determined to be less than or equal to a preset time interval, restarting the channel access procedure at the target moment;
performing resource reselection;
abandoning transmissions, which cannot be transmitted due to channel access failure, in MCSt; and
abandoning the first transmission and subsequent transmissions; wherein the first transmission is any one of the MCSt.

Alternatively, the target moment may include at least one of:
a first moment configured or pre-configured by higher layers;
a second moment in response to that channel access failure is determined; and
a start moment of the first transmission.

Alternatively, the preset time interval is one of:
a length of a time slot; or
an interval between the target moment and a second transmission, wherein the second transmission is a next transmission subsequent to the first transmission in the MCSt.

Alternatively, the time domain length occupied by the MCSt is one of:
a pre-configured first time-domain length; or
a second time-domain length determined according to the remaining COT.

Alternatively, the apparatus 1300 further includes:
a second processing component, configured to, in a case that some resources of transmission resources in the MCSt are located in the target COT, performing at least one of the following:
under the condition of meeting the maximum extendable time of the COT, extending the target COT until all the transmission resources are located in the target COT; and
for transmissions corresponding to transmission resources which are not located in the target COT, using the first channel access type to perform channel access.

Alternatively, the apparatus 1300 further includes:
a third processing component, configured to determine a minimum value of the channel access time according to a CAPC used by the second transmission, wherein the second transmission is a next transmission subsequent to the first transmission in the MCSt.

The fourth embodiment of the disclosure corresponds to the method in the first embodiment. All implementation means in the first embodiment are applicable to an embodiment of the channel access processing apparatus, and can also achieve the same technical effect.

### Fifth Embodiment

As shown in Fig. 14, an apparatus for resource selection 1400 according to an embodiment of the disclosure includes:
a fourth processing component 1401, configured to perform resource selection or resource reselection according to at least one of the following information:
received shared channel occupancy information;
the maximum extendable time of the COT; and
a time domain length occupied by the MCSt.

Alternatively, the time-domain length occupied by the MCSt is one of:
a pre-configured first time-domain length; or
a second time-domain length determined according to the remaining COT.

Alternatively, the apparatus 1400 further includes at least one of:
a fifth processing component, configured to preferentially select in the COT a transmission resource during resource selection or resource reselection;
a sixth processing component, configured to determine a resource selection window according to available COT during resource selection or resource reselection, and
select, in response to performing resource reselection for the target transmission, a resource consecutive with the time domain position of the MCSt, wherein the target transmission includes at least one transmission that fails in the MCSt.

Alternatively, the apparatus 1400 further includes:
a seventh processing component, configured to, in a case that some resources of transmission resources in the MCSt are located in the target COT, performing at least one of the following:
performing resource reselection on all transmission resources of the MCSt;
performing resource reselection on transmission resources, which are not located in the target COT, in the MCSt; and
maintaining the transmission resources of the MCSt.

The fifth embodiment of the disclosure corresponds to the method of the second embodiment. All implementation means in the second embodiment are applicable to the embodiments of the apparatus for resource selection, and can also achieve the same technical effect.

### Sixth embodiment

As shown in Fig. 15, an apparatus 1500 for determining a CAPC in an embodiment of the disclosure includes:
a CAPC determining component 1501, configured to determine a CAPC for MCSt, wherein the CAPC used for MCSt is one of the following:
a first CAPC corresponding to a data packet with the highest CAPC in the MCSt;
a second CAPC corresponding to a data packet with the lowest CAPC in the MCSt;
a pre-configured third CAPC;
a default fourth CAPC;
a fifth CAPC corresponding to a randomly selected transmission in the MCSt; and
a sixth CAPC corresponding to most transmissions in the MCSt. The sixth embodiment of the disclosure corresponds to the method of the third embodiment. All implementation means in the third embodiment are applicable to the embodiment of the apparatus for determining CAPC, and can also achieve the same technical effect.

### Seventh embodiment

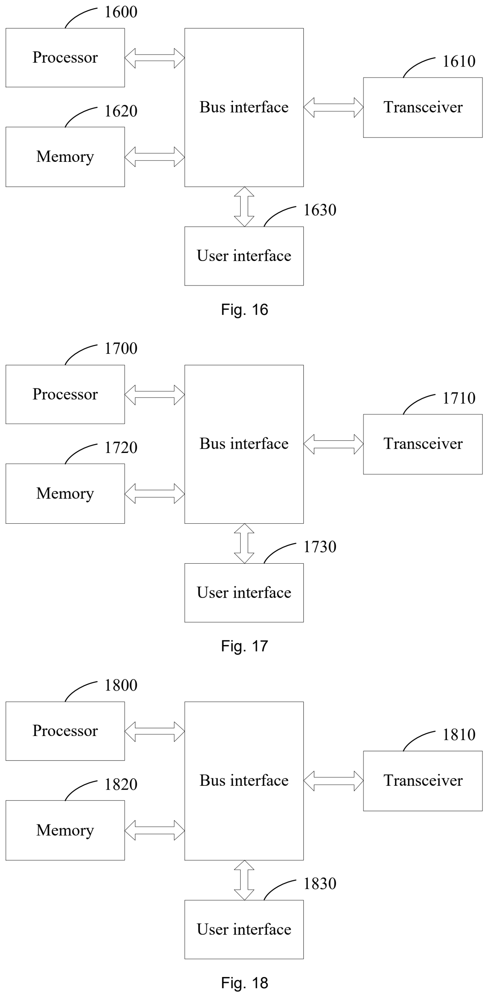

In order to better achieve the described object, as shown in Fig. 16, the seventh embodiment of the disclosure further provides a terminal, including:
a processor 1600; and a memory 1620 connected to the processor 1600 by means of a bus interface, wherein the memory 1620 is used for storing a program and data which are used by the processor 1600 in response to that executing an operation, and the processor 1600 calls and executes the program and data stored in the memory 1620.

The transceiver 1610 is connected to a bus interface, and is configured to receive and send data under the control of the processor 1600. The processor 1600 is configured to read a program in the memory 1620 to implement the following steps:
in a case that channel access is not completed before a first transmission, performing at least one of the following:
continuing the uncompleted channel access procedure;
restarting the channel access procedure at a target moment;
in response to that the minimum value of the channel access time is determined to be less than or equal to a preset time interval, restarting the channel access procedure at the target moment;
performing resource reselection;
abandoning transmissions, which cannot be transmitted due to channel access failure, in MCSt; and
abandoning the first transmission and subsequent transmissions; wherein the first transmission is any one of the MCSt.

In Fig. 16, the bus architecture may include any number of buses and bridges connected to each other, and is alternatively linked by various circuits of one or more processors represented by the processor 1600 and a memory represented by the memory 1620. The bus architecture may further link various other circuits such as a peripheral device, a voltage regulator, and a power management circuit together. These are all well-known in the art, and therefore are not further described in the present specification. The bus interface provides an interface. The transceiver 1610 may be a plurality of elements, that is, include a transmitter and a receiver, and provide a unit for communicating with various other apparatuses on a transmission medium. For different terminals, the user interface 1630 may be an interface for externally and internally connecting a required device. The connected device includes, but is not limited to a keypad, a display, a speaker, a microphone, a joystick, or the like. The processor 1600 is responsible for managing the bus architecture and common processing, and the memory 1620 may store data used in response to that the processor 1600 performs an operation.

Alternatively, the target moment includes at least one of:
a first moment configured or pre-configured by higher layers;
a second moment in response to that channel access failure is determined; and
a start moment of the first transmission.

Alternatively, the preset time interval is one of:
a length of a time slot; or
an interval between the target moment and a second transmission, wherein the second transmission is a next transmission subsequent to the first transmission in the MCSt.

Alternatively, the time-domain length occupied by the MCSt is one of:
a pre-configured first time-domain length; or
a second time-domain length determined according to the remaining COT.

Alternatively, the processor 1600 is configured to read a program in the memory 1620 to implement the following steps:
in a case that some resources of transmission resources in the MCSt are located in the target COT, performing at least one of the following:
under the condition of meeting the maximum extendable time of the COT, extending the target COT until all the transmission resources are located in the target COT; and
for transmissions corresponding to transmission resources which are not located in the target COT, using the first channel access type to perform channel access.

Alternatively, the processor 1600 is configured to read a program in the memory 1620 to implement the following steps:
determining a minimum value of the channel access time according to a CAPC used by the second transmission, wherein the second transmission is a next transmission subsequent to the first transmission in the MCSt.

The terminal provided in the disclosure does not complete channel access before the first transmission, and executes at least one of the following: continuing the uncompleted channel access procedure; restarting the channel access procedure at a target moment; in response to that the minimum value of the channel access time is determined to be less than or equal to a preset time interval, restarting the channel access procedure at the target moment; performing resource reselection; abandoning transmissions, which cannot be transmitted due to channel access failure, in MCSt; and abandoning the first transmission and subsequent transmissions; wherein the first transmission is any one of the MCSt. In this way, a processing mechanism for channel access of MCSt is defined, thereby solving the problem in the related art that there is no a channel access mechanism suitable for MCSt.

A person skilled in the art may understand that all or part of the steps of the above embodiments may be completed by hardware, or may be completed by instructing relevant hardware through a computer program, wherein the computer program includes instructions for executing part or all of the steps of the above method. The computer program may be stored in a readable storage medium, and the storage medium may be any form of storage medium.

### Eighth embodiment

In order to better achieve the described object, as shown in Fig. 17, the seventh embodiment of the disclosure further provides a terminal, including:
a processor 1700; and a memory 1820 connected to the processor 1700 by means of a bus interface, wherein the memory 1720 is used for storing a program and data which are used by the processor 1700 in response to that executing an operation, and the processor 1700 calls and executes the program and data stored in the memory 1720.

The transceiver 1710 is connected to a bus interface, and is configured to receive and send data under the control of the processor 1700. The processor 1700 is configured to read a program in the memory 1720 to implement the following steps:
performing resource selection or resource reselection according to at least one of the following information:
received shared channel occupancy information;
the maximum extendable time of the COT; and
a time domain length occupied by the MCSt.

In Fig. 17, the bus architecture may include any number of buses and bridges connected to each other, and is alternatively linked by various circuits of one or more processors represented by the processor 1700 and a memory represented by the memory 1720. The bus architecture may further link various other circuits such as a peripheral device, a voltage regulator, and a power management circuit together. These are all well-known in the art, and therefore are not further described in the present specification. The bus interface provides an interface. The transceiver 1710 may be a plurality of elements, that is, include a transmitter and a receiver, and provide a unit for communicating with various other apparatuses on a transmission medium. For different terminals, the user interface 1730 may be an interface for externally and internally connecting a required device. The connected device includes, but is not limited to a keypad, a display, a speaker, a microphone, a joystick, or the like. The processor 1700 is responsible for managing the bus architecture and common processing, and the memory 1720 may store data used in response to that the processor 1700 performs an operation.

Alternatively, the time domain length occupied by the MCSt is one of:
a pre-configured first time-domain length; or
a second time-domain length determined according to the remaining COT.

Alternatively, the method further includes at least one of:
during resource selection or resource reselection, preferentially selecting in the COT a transmission resource;
during resource selection or resource reselection, determining a resource selection window according to available COT;
in response to performing resource reselection for the target transmission, selecting a resource consecutive with the time domain position of the MCSt, wherein the target transmission includes at least one transmission that fails in the MCSt.

Alternatively, the processor 1700 is configured to read a program in the memory 1720 to implement the following steps:
in a case that some resources of transmission resources in the MCSt are located in the target COT, performing at least one of the following:
performing resource reselection on all transmission resources of the MCSt;
performing resource reselection on transmission resources, which are not located in the target COT, in the MCSt; and
maintaining the transmission resources of the MCSt.

In the terminal provided in the embodiments of the disclosure, resource selection or resource reselection is performed according to at least one of received shared channel occupancy information, the maximum extendible time of COT, and a time domain length occupied by MCSt, thereby solving the problem in the related art that there is no resource selection mechanism suitable for MCSt.

A person skilled in the art may understand that all or part of the steps of the above embodiments may be completed by hardware, or may be completed by instructing relevant hardware through a computer program, wherein the computer program includes instructions for executing part or all of the steps of the above method. The computer program may be stored in a readable storage medium, and the storage medium may be any form of storage medium.

### Ninth embodiment

In order to better achieve the described object, as shown in Fig. 18, the seventh embodiment of the disclosure further provides a terminal, including:
a processor 1800; and a memory 1820 connected to the processor 1800 by means of a bus interface, wherein the memory 1820 is used for storing a program and data which are used by the processor 1800 in response to that executing an operation, and the processor 1800 calls and executes the program and data stored in the memory 1820.

The transceiver 1810 is connected to a bus interface, and is configured to receive and send data under the control of the processor 1800. The processor 1800 is configured to read a program in the memory 1820 to implement the following steps:
determining a CAPC used for MCSt, wherein the CAPC used for MCSt is one of the following:
a first CAPC corresponding to a data packet with the highest CAPC in the MCSt;
a second CAPC corresponding to a data packet with the lowest CAPC in the MCSt;
a pre-configured third CAPC;
a default fourth CAPC;
a fifth CAPC corresponding to a randomly selected transmission in the MCSt; and
a sixth CAPC corresponding to most transmissions in the MCSt.

In Fig. 18, the bus architecture may include any number of buses and bridges connected to each other, and is alternatively linked by various circuits of one or more processors represented by the processor 1800 and a memory represented by the memory 1820. The bus architecture may further link various other circuits such as a peripheral device, a voltage regulator, and a power management circuit together. These are all well-known in the art, and therefore are not further described in the present specification. The bus interface provides an interface. The transceiver 1810 may be a plurality of elements, that is, include a transmitter and a receiver, and provide a unit for communicating with various other apparatuses on a transmission medium. For different terminals, the user interface 1830 may be an interface for externally and internally connecting a required device. The connected device includes, but is not limited to a keypad, a display, a speaker, a microphone, a joystick, or the like. The processor 1800 is responsible for managing the bus architecture and common processing, and the memory 1820 may store data used in response to that the processor 1800 performs an operation.

The terminal provided in the embodiments of the disclosure determines that a CAPC used in MCSt is one of the following: a pre-configured third CAPC; a second CAPC corresponding to a data packet with the lowest CAPC in the MCSt; a pre-configured third CAPC; a default fourth CAPC; a fifth CAPC corresponding to a randomly selected transmission in the MCSt; and a sixth CAPC corresponding to most transmissions in the MCSt, thereby solving the problem in the related art that there is no method for determining CAPC applicable to MCSt.

A person skilled in the art may understand that all or part of the steps of the above embodiments may be completed by hardware, or may be completed by instructing relevant hardware through a computer program, wherein the computer program includes instructions for executing part or all of the steps of the above method. The computer program may be stored in a readable storage medium, and the storage medium may be any form of storage medium.

In addition, the embodiment of the disclosure further provides a computer-readable storage medium, on which a computer program is stored, and in response to that the program is executed by a processor, the steps of the methods in the first embodiment, the second embodiment, or the third embodiment are implemented. Furthermore, the same technical effect can be achieved, and in order to avoid repetition, it will not be repeated here.

In addition, it needs to be pointed out that, in the apparatus and method of the disclosure, obviously, each component or each step may be decomposed and/or recombined. These decomposition and/or recombination should be regarded as equivalent solutions of the disclosure. In addition, the steps of performing the above series of processing may be performed naturally in chronological order in the order of description, but do not necessarily need to be performed in chronological order, and some steps may be performed in parallel or independently of each other. A person of ordinary skill in the art can understand that all or any steps or components of the methods and apparatuses of the disclosure can be implemented in hardware, firmware, software, or a combination thereof in any computing device (including processors, storage media, etc.) or network of computing devices, this can be achieved by a person skilled in the art by using their basic programming skills in the case of reading the description of the disclosure.

Therefore, the object of the disclosure may also be achieved by running a program or a set of programs on any computing device. The computing device may be a well-known universal device. Therefore, the object of the disclosure may also be achieved only by providing a program product containing program codes for implementing the method or device. That is to say, such a program product also constitutes the disclosure, and a storage medium storing such a program product also constitutes the disclosure. Apparently, the storage medium may be any known storage medium or any storage medium developed in the future. It should also be noted that in the devices and methods of the present disclosure, apparently, each component or each step may be decomposed and/or recombined. These decomposition and/or recombination should be regarded as equivalent solutions of the disclosure. In addition, the steps of performing the above series of processing may be performed naturally in chronological order in the order of description, but do not necessarily need to be performed in chronological order, and some steps may be performed in parallel or independently of each other.

The description above relates to preferred embodiments of the disclosure. It should be noted that for a person of ordinary skill in the present technical field, several improvements and modifications can also be made without departing from the principle of the disclosure, and these improvements and modifications shall also be considered as within the scope of protection of the disclosure.

## Claims

1. A method for processing channel access procedure, comprising:
in a case that channel access is not completed before a first transmission, performing at least one of the following:
continuing the uncompleted channel access procedure;
restarting the channel access procedure at a target moment;
in response to that the minimum value of the channel access time is determined to be less than or equal to a preset time interval, restarting the channel access procedure at the target moment;
performing resource reselection;
abandoning a transmission, which cannot be transmitted due to channel access failure, in multi-consecutive slot transmission(MCSt); and
abandoning the first transmission and subsequent transmissions; wherein the first transmission is any one of the MCSt.

2. The method for processing channel access procedure as claim in claim 1, wherein the target moment comprises at least one of:
a first moment configured or pre-configured by higher layers;
a second moment in response to that channel access failure is determined; and
a start moment of the first transmission.

3. The method for processing channel access procedure as claim in claim 1, wherein the preset time interval is one of:
a length of a time slot; or
an interval between the target moment and a second transmission, wherein the second transmission is a next transmission subsequent to the first transmission in the MCSt.

4. The method for processing channel access procedure as claim in claim 1, wherein a time-domain length occupied by the MCSt is one of:
a pre-configured first time-domain length; or
a second time-domain length determined according to the remaining channel occupancy time (COT).

5. The method for processing channel access procedure as claim in claim 1, further comprising:
in a case that some resources of transmission resources in the MCSt are located in the target COT, performing at least one of the following:
under the condition of meeting the maximum extendable time of the COT, extending the target COT until all the transmission resources are located in the target COT; and
for transmissions corresponding to transmission resources which are not located in the target COT, using the first channel access type to perform channel access.

6. The method for processing channel access procedure as claim in claim 1, wherein before restarting the channel access procedure at the target moment, the method further comprises:
determining a minimum value of the channel access time according to a channel access priority class (CAPC) used by the second transmission, wherein the second transmission is a next transmission subsequent to the first transmission in the MCSt.

7. A method for resource selection, comprising:
performing resource selection or resource reselection according to at least one of the following information:
received shared channel occupancy information;
the maximum extendable time of the COT; and
a time-domain length occupied by the MCSt.

8. The method for resource selection as claim in claim 7, wherein the time-domain length occupied by the MCSt is one of:
a pre-configured first time-domain length; or
a second time-domain length determined according to the remaining COT.

9. The method for resource selection as claim in claim 7, wherein the method further comprises at least one of the following:
during resource selection or resource reselection, preferentially selecting in the COT a transmission resource;
during resource selection or resource reselection, determining a resource selection window according to available COT;
in response to performing resource reselection for the target transmission, selecting a resource consecutive with the time domain position of the MCSt, wherein the target transmission comprises at least one transmission that fails in the MCSt.

10. The method for resource selection as claim in claim 7, further comprising:
in a case that some resources of transmission resources in the MCSt are located in the target COT, performing at least one of the following:
performing resource reselection on all transmission resources of the MCSt;
performing resource reselection on transmission resources, which are not located in the target COT, in the MCSt; and
maintaining the transmission resources of the MCSt.

11. A method for determining CAPC, comprising:
determining a CAPC used for MCSt, wherein the CAPC used for MCSt comprises one of the following:
a first CAPC corresponding to a data packet with the highest CAPC in the MCSt;
a second CAPC corresponding to a data packet with the lowest CAPC in the MCSt;
a pre-configured third CAPC;
a default fourth CAPC;
a fifth CAPC corresponding to a randomly selected transmission in the MCSt; and
a sixth CAPC corresponding to most transmissions in the MCSt.

12. A terminal, comprising: a transceiver, a memory, a processor and a computer program which is stored on the memory and can operate on the processor, the processor executing the computer program to implement the steps of the method for processing channel access procedure as claim in any one of claims 1 to 6, or the steps of the method for resource selection as claim in any one of claims 7 to 10, or the steps of the method for determining the CAPC as claim in claim 11.

13. A apparatus for processing channel access procedure, comprising:
a first processing module, configured to, in a case that channel access is not completed before a first transmission, perform at least one of the following:
continuing the uncompleted channel access procedure;
restarting the channel access procedure at a target moment;
in response to that the minimum value of the channel access time is determined to be less than or equal to a preset time interval, restarting the channel access procedure at the target moment;
performing resource reselection;
abandoning a transmission, which cannot be transmitted due to channel access failure, in MCSt; and
abandoning the first transmission and subsequent transmissions; wherein the first transmission is any one of the MCSt.

14. An apparatus for resource selection, comprising:
a fourth processing module, configured to perform resource selection or resource reselection according to at least one of the following information:
received shared channel occupancy information;
the maximum extendable time of the COT; and
a time-domain length occupied by the MCSt.

15. An apparatus for determining CAPC, comprising:
a CAPC determining module, configured to determine a CAPC for MCSt, wherein the CAPC used for MCSt is one of the following:
a first CAPC corresponding to a data packet with the highest CAPC in the MCSt;
a second CAPC corresponding to a data packet with the lowest CAPC in the MCSt;
a pre-configured third CAPC;
a default fourth CAPC;
a fifth CAPC corresponding to a randomly selected transmission in the MCSt; and
a sixth CAPC corresponding to most transmissions in the MCSt.

16. A computer readable storage medium, on which a computer program is stored, the computer program implementing, in response to that being executed by the processor, the steps of the method for processing channel access procedure as claim in any one of claims 1 to 6, or the steps of the method for resource selection as claim in any one of claims 7 to 10, or the steps of the method for determining the CAPC as claim in claim 11.
